# EUROPEAN PATENT APPLICATION

(11) **EP 4 733 969 A2**
(43) Date of publication of application: **29.04.2026**
(21) Application number: 26166157.3
(22) Date of filing: 19.03.2026
(51) Int. Cl.: G06F 21/53, G06F 9/46, G06F 9/48

(54) **SANDBOX SCHEDULING METHOD, ELECTRONIC DEVICE, STORAGE MEDIUM AND PROGRAM PRODUCT**

(30) Priority: 13.11.2025 CN 202511660169
(71) Applicant: Beijing Baidu Netcom Science Technology Co., Ltd., Beijing 100085 (CN)
(72) Inventor: DENG, Kai, Beijing, 100085 (CN); WEI, Mingzhi, Beijing, 100085 (CN); JU, Cheng, Beijing, 100085 (CN)
(74) Representative: Lucke, Andreas

(57) **Abstract**

The present disclosure provides a sandbox scheduling method and related apparatus based on a code generation large model, relating to the field of computer technologies, and specifically to the field of artificial intelligence technologies such as large language models, sandboxes, human-computer interaction, and low-code development. The method includes: determining personalized requirement information according to a code development request initiated by a target user; in response to the presence of a reusable sandbox matching the personalized requirement information, allocating the reusable sandbox matching the personalized requirement information to the target user, where the reusable sandbox is a sandbox retaining data associated with the target user; in response to the absence of a reusable sandbox matching the personalized requirement information, determining a to-be-activated sandbox corresponding to the personalized requirement information from a pre-constructed sandbox hot pool, and allocating the to-be-activated sandbox to the target user, where different sandboxes respectively provide the same code generation large model in different operating environments. The method improves the resource utilization efficiency of sandbox scheduling.

## Description

### TECHNICAL FIELD

The present disclosure relates to the field of computer technologies, specifically to artificial intelligence technology fields such as large language models, sandboxes, human-computer interaction, and low-code development, and in particular, to a sandbox scheduling method based on a code generation large model, an electronic device, a computer-readable storage medium, and a computer program product.

### BACKGROUND

In large model applications, especially in usage scenarios of code generation agents, code execution relies on the isolation and security of sandbox environments. Frequent code execution and testing require the use of multiple independent sandbox environments. The traditional way of creating a sandbox is that the system recreates a new sandbox environment each time a request to execute code is received, thereby ensuring the isolation and security of the system. How to optimize the management and execution methods of sandbox environments and improve resource utilization efficiency has become an important challenge faced by current code generation agent systems.

### SUMMARY

Embodiments of the present disclosure propose a sandbox scheduling method, apparatus, device, storage medium, and program product.

In a first aspect, an embodiment of the present disclosure provides a sandbox scheduling method, including: in response to receiving a Server-Sent Events (SSE) request, establishing an SSE long connection; generating a session identifier and returning the session identifier through the SSE long connection; in response to receiving a message request carrying the session identifier, sending the message request to a server corresponding to the session identifier for processing to obtain response data; and returning the response data through the SSE long connection.

In a second aspect, an embodiment of the present disclosure provides an electronic device, include:
at least one processor; and
a memory communicatively connected to the at least one processor; where
the memory stores instructions executable by the at least one processor, and the instructions, when executed by the at least one processor, cause the at least one processor to perform the method described in the first aspect.

In a third aspect, an embodiment of the present disclosure provides a non-transitory computer-readable storage medium storing computer instructions, where the computer instructions are configured to cause a computer to perform the method described in the first aspect.

In a fourth aspect, an embodiment of the present disclosure provides a computer program product, include a computer program which, when executed by a processor, implements the steps of the method described in the first aspect.

The key or important features of the embodiments of the present disclosure are not intended to limit the scope of the present disclosure. Other features of the present disclosure will become readily apparent from the following description.

### BRIEF DESCRIPTION OF THE DRAWINGS

By reading the detailed description of non-limiting embodiments with reference to the following drawings, other features, objects, and advantages of the present disclosure will become more apparent:
FIG. 1 is an exemplary system architecture to which the present disclosure may be applied;
FIG. 2 is a flowchart of a sandbox scheduling method based on a code generation large model according to an embodiment of the present disclosure;
FIG. 3 is a flowchart of a sandbox scheduling method based on a code generation large model according to another embodiment of the present disclosure;
FIG. 4 is a flowchart of a sandbox scheduling method based on a code generation large model according to yet another embodiment of the present disclosure;
FIG. 5 is a structural block diagram of a sandbox scheduling apparatus based on a code generation large model according to an embodiment of the present disclosure;
FIG. 6 is a schematic structural diagram of an electronic device adapted for executing the sandbox scheduling method based on a code generation large model according to an embodiment of the present disclosure.

### DETAILED DESCRIPTION OF EMBODIMENTS

The following describes exemplary embodiments of the present disclosure with reference to the accompanying drawings, including various details of the embodiments to facilitate understanding, which should be regarded as merely exemplary. Therefore, those of ordinary skill in the art should recognize that various changes and modifications can be made to the embodiments described herein without departing from the scope and spirit of the present disclosure. Similarly, for clarity and conciseness, descriptions of well-known functions and structures are omitted from the following description. It should be noted that the embodiments of the present disclosure and the features in the embodiments can be combined with each other without conflict.

In the technical solutions of the present disclosure, the collection, storage, use, processing, transmission, provision, and disclosure of user personal information involved all comply with the provisions of relevant laws and regulations and do not violate public order and good customs.

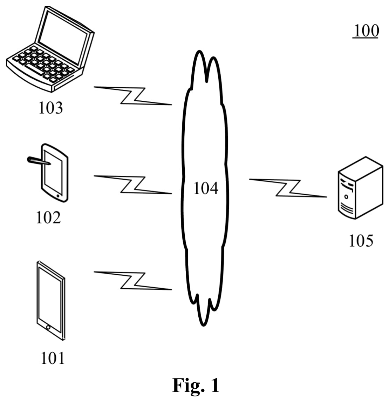

FIG. 1 shows an exemplary system architecture 100 to which the embodiments of the sandbox scheduling method, apparatus, electronic device, and computer-readable storage medium based on a code generation large model of the present disclosure may be applied.

As shown in FIG. 1, the system architecture 100 may include terminal devices 101, 102, 103, a network 104, and a server 105. The network 104 serves as a medium for providing communication links between the terminal devices 101, 102, 103 and the server 105. The network 104 may include various connection types, such as wired, wireless communication links, or fiber optic cables, among others.

Users may use the terminal devices 101, 102, 103 to interact with the server 105 through the network 104 to receive or send messages, etc. Various applications for implementing information communication between the two can be installed on the terminal devices 101, 102, 103 and the server 105, such as web browser applications, search applications, instant messaging applications, etc.

The terminal devices 101, 102, 103 and the server 105 may be hardware or software. When the terminal devices 101, 102, 103 are hardware, they may be various electronic devices with display screens, including but not limited to smartphones, tablet computers, laptop portable computers, desktop computers, etc.; when the terminal devices 101, 102, 103 are software, they may be installed in the above-listed electronic devices, and may be implemented as multiple software pieces or software modules, or as a single software piece or software module, which is not specifically limited herein. When the server 105 is hardware, it may be implemented as a distributed server cluster composed of multiple servers, or as a single server; when the server 105 is software, it may be implemented as multiple software pieces or software modules, or as a single software piece or software module, which is not specifically limited herein.

The server 105 may provide various services through various built-in applications. Taking a web browser application that can provide a sandbox scheduling method based on a code generation large model as an example, the server 105 may achieve the following effects when running the web browser application: determine personalized requirement information according to a code development request initiated by a target user; when there is a reusable sandbox matching the personalized requirement information, allocate the reusable sandbox matching the personalized requirement information to the target user, where the reusable sandbox is a sandbox retaining data associated with the target user; when there is no reusable sandbox matching the personalized requirement information, determine a to-be-activated sandbox corresponding to the personalized requirement information from a pre-constructed sandbox hot pool, and allocate the to-be-activated sandbox to the target user, where different sandboxes respectively provide the same code generation large model in different operating environments.

It should be noted that the code development request may be obtained not only from the terminal devices 101, 102, 103 through the network 104, but also pre-stored locally on the server 105 in various ways. Therefore, when the server 105 detects that such data has been stored locally (for example, starting to process a previously retained code development request), it can choose to directly obtain such data from the local. In this case, the exemplary system architecture 100 may not include the terminal devices 101, 102, 103 and the network 104.

Since scheduling a sandbox based on a code development request requires occupying more computing resources and strong computing capabilities, the sandbox scheduling method based on a code generation large model provided in the subsequent embodiments of the present disclosure is generally executed by the server 105 with strong computing capabilities and more computing resources. Correspondingly, the sandbox scheduling apparatus based on a code generation large model is generally also arranged in the server 105. However, it should also be noted that when the terminal devices 101, 102, 103 also have the required computing capabilities and computing resources, the terminal devices 101, 102, 103 can also complete all the above-mentioned computations entrusted to the server 105 through the web browser applications installed thereon, and then output the same results as the server 105. Especially when there are multiple terminal devices with different computing capabilities, but the web browser application determines that the terminal device where it is located has strong computing capabilities and more remaining computing resources, the terminal device may be allowed to perform the above-mentioned computations, thereby appropriately reducing the computing pressure on the server 105. Correspondingly, the sandbox scheduling apparatus based on a code generation large model can also be provided in the terminal devices 101, 102, 103. In this case, the exemplary system architecture 100 may not include the server 105 and the network 104.

It should be understood that the number of terminal devices, networks, and servers in FIG. 1 is merely illustrative. According to implementation needs, there may be any number of terminal devices, networks, and servers.

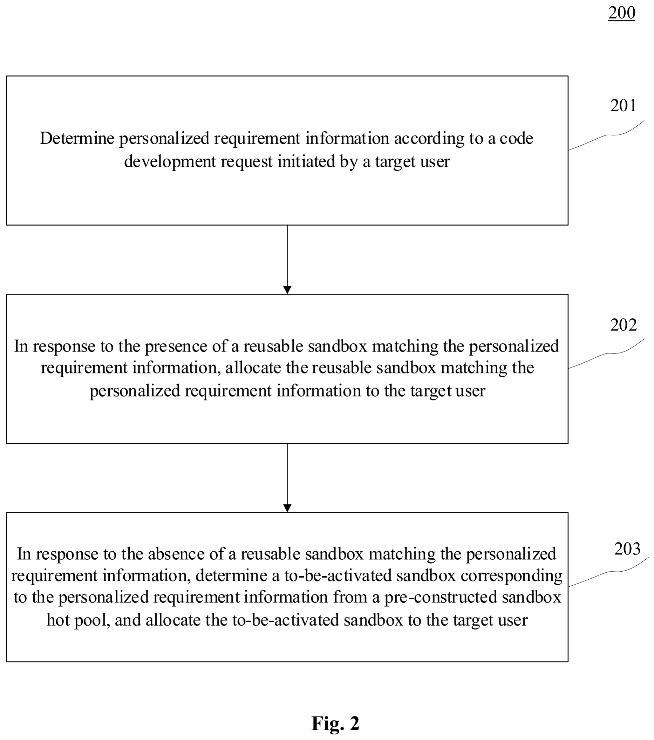

Please refer to FIG. 2. FIG. 2 is a flowchart of a sandbox scheduling method based on a code generation large model provided by an embodiment of the present disclosure, where the flow 200 includes the following steps.

Step 201: Determine personalized requirement information according to a code development request initiated by a target user.

In this embodiment, an execution subject (for example, the server 105 shown in FIG. 1) may receive a code development request initiated by a target user through an interactive portal or interface, where the target user may refer to a user of the system, such as a developer or a tester. The code development request is used to indicate the development environment required by the target user for developing code, and usually includes natural language descriptions, project identifiers, technology stack specifications, resource requirements, etc. For example, the natural language description may be text directly input by the target user: "Is the environment for my order processing microservice project from yesterday still available? I need to continue debugging"; the project identifier may be a project ID, project name, or code repository link directly specified by the target user, indicating that the target user currently needs the development environment corresponding to this project; the technology stack specification may be an explicit requirement proposed by the target user: "I need a development environment with Node.js v18 + React v18 + PostgreSQL"; the resource requirement refers to an explicit resource requirement directly proposed by the target user such as "This model training requires a GPU", or an implicit resource requirement inferred from the target user proposal such as "Starting a large-scale data processing task" which requires more CPU/memory.

In this embodiment, the execution subject may parse the code development request through natural language understanding, structured parameter parsing, etc., to determine the personalized requirement information of the target user. The personalized requirement information is used to help the system customize a development environment for the target user, and usually includes user information, technology stack information, task type information, resource requirement information, etc. For example, when the execution subject receives a code development request initiated by the target user: "Is the environment for my order processing microservice project from yesterday still available? I need to continue debugging", it can use a large language model to extract keywords such as "yesterday", "order processing microservice project", and "debugging" from the code development request to determine the personalized requirement information; when the execution subject directly specifies the technology stack, project ID, etc. through options or command parameters, the system directly extracts these explicit information as the personalized requirement information through structured parameter parsing.

Step 202: In response to the presence of a reusable sandbox matching the personalized requirement information, allocate the reusable sandbox matching the personalized requirement information to the target user.

In this embodiment, when the execution subject determines that there is a reusable sandbox matching the personalized requirement information, it directly allocates the reusable sandbox matching the personalized requirement information to the target user. A sandbox refers to an isolated virtual execution environment used to safely run code to avoid affecting the host system; a reusable sandbox is a sandbox created or used at a certain historical moment that retains data associated with the target user. In addition to maintaining the development environment at that time, the reusable sandbox also includes the code, dependencies, running programs, debugging status, and even unsaved files in the sandbox at that time.

In this embodiment, the execution subject may sequentially compare each item of information included in the personalized requirement information with the reusable sandbox to determine whether there is a reusable sandbox matching the personalized requirement information. Specifically, when the execution subject determines that the user information, technology stack information, and task type information in the personalized requirement information are consistent with the user ID, technology stack, and project ID corresponding to the reusable sandbox, respectively, and the available resources of the reusable sandbox meet the resource requirement information in the personalized requirement information, it determines that there is a reusable sandbox matching the personalized requirement information, and directly allocates the reusable sandbox to the target user.

Step 203: In response to the absence of a reusable sandbox matching the personalized requirement information, determine a to-be-activated sandbox corresponding to the personalized requirement information from a pre-constructed sandbox hot pool, and allocate the to-be-activated sandbox to the target user.

In this embodiment, when the execution subject determines that there is no reusable sandbox matching the personalized requirement information, it determines a to-be-activated sandbox corresponding to the personalized requirement information from a pre-constructed sandbox hot pool, and allocates the to-be-activated sandbox to the target user. The sandbox hot pool refers to a collection of pre-created and pre-warmed to-be-activated sandboxes. These to-be-activated sandboxes have been installed with a basic operating system and a core code running environment and are in a state waiting to be woken up. Different sandboxes respectively provide the same code generation large model in different operating environments.

In this embodiment, when the execution subject determines the to-be-activated sandbox corresponding to the personalized requirement information from the pre-constructed sandbox hot pool, first, it must ensure that the basic operating system and core code running environment of the to-be-activated sandbox strictly match the personalized requirement information; second, the available resources (such as the number of CPU cores, memory size, presence of GPU, etc.) of the to-be-activated sandbox must meet or exceed the resource requirements of the personalized requirement information. In addition, since the to-be-activated sandbox on a node with low resource load has high work efficiency and low latency, on the basis of meeting the above conditions, the execution subject may also select the optimal to-be-activated sandbox as the to-be-activated sandbox corresponding to the personalized requirement information based on the resource load conditions of different nodes.

In this embodiment, after determining the to-be-activated sandbox corresponding to the personalized requirement information, the execution subject first wakes up the to-be-activated sandbox, then configures the woken-up sandbox according to the personalized requirement information, and allocates the configured sandbox to the target user.

The sandbox scheduling method based on a code generation large model provided by the embodiment of the present disclosure first determines personalized requirement information according to a code development request initiated by a target user; when there is a reusable sandbox matching the personalized requirement information, it preferentially allocates the reusable sandbox matching the personalized requirement information to the target user; when there is no reusable sandbox matching the personalized requirement information, it determines a to-be-activated sandbox corresponding to the personalized requirement information from a pre-constructed sandbox hot pool and allocates the to-be-activated sandbox to the target user. Since the reusable sandbox completely retains the user last development state, this embodiment realizes the rapid recovery of the development environment through the priority matching of the reusable sandbox, ensuring a continuous experience during the development process. In addition, this embodiment also discloses a sandbox hot pool scheduling strategy when there is no reusable sandbox matching the personalized requirement information. By screening the to-be-activated sandbox matching the personalized requirement information from the sandbox hot pool and performing personalized configuration on the to-be-activated sandbox according to the personalized requirement information, the delay in configuring the development environment is reduced, and the resource utilization efficiency is improved.

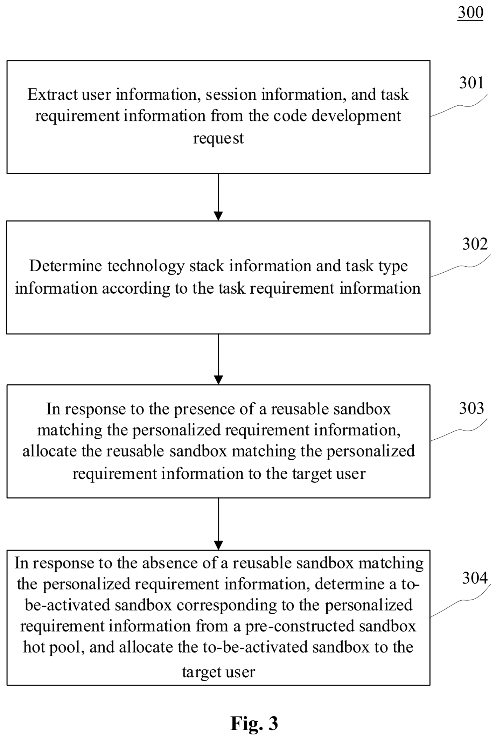

To deepen the understanding of how to determine personalized requirement information according to a code development request, please refer to FIG. 3. FIG. 3 is a flowchart of another sandbox scheduling method based on a code generation large model provided by an embodiment of the present disclosure. Specifically, for the case of determining personalized requirement information according to a code development request, a specific implementation manner is given, where the flow 300 includes the following steps.

Step 301: Extract user information, session information, and task requirement information from the code development request.

In this embodiment, the execution subject extracts user information, session information, and task requirement information from the code development request initiated by the target user. The user information includes the user ID of the target user and historical preferences, and the historical preferences refer to the development habits such as the technology stack and development environment commonly used by the target user; the session information refers to the historical development records of the target user, and the session information may be directly extracted from the code development request, for example, the target user explicitly continues the last session in the code development request, or may be obtained by associating with the user ID in the database; the task requirement information is executable environment configuration information parsed from the code development request, including the technology stack and task type.

Step 302: Determine technology stack information and task type information according to the task requirement information.

In this application, the execution subject determines technology stack information and task type information according to the task requirement information. The technology stack information includes at least one of a programming language, front-end/back-end information, and design architecture. Specifically, the programming language refers to a specific programming language used to write the target code, such as Python, JAVA, C++, etc., and may be further subdivided into different versions, such as C++ 2.0 version and 2.5 version; the front-end/back-end may be divided into front-end-oriented and back-end-oriented; the design architecture may be a microservice architecture, a client-server architecture, an event-driven architecture, etc.; the task type information may include at least one of code writing, code compilation, and test running.

Step 303: In response to the presence of a reusable sandbox matching the personalized requirement information, allocate the reusable sandbox matching the personalized requirement information to the target user.

In this embodiment, the reusable sandbox matching the personalized requirement information refers to a reusable sandbox that matches at least one of the user information, session information, technology stack information, and task type information, where the more matching items, the higher the matching degree. The independent contribution degrees of the session information, user information, technology stack information, and task type information to the matching degree decrease in sequence. In addition, the reusable sandbox includes at least one of the following: a sandbox with identical user information, a sandbox with associated user information related to the user information, a sandbox with identical session information, and a sandbox with historical session information matching the session information.

Next, a specific example is given to help understand this embodiment. It is parsed that the personalized requirement of the target user Xiao Wang is to create a new payment interface API (task type information), the technology stack specifies Python 3.11 and Flask framework 2.2 version. There are 3 reusable sandboxes in the current repository, namely Sandbox X, Sandbox Y, and Sandbox Z. Sandbox X was used by Xiao Wang (user information matching) in the same project session (i.e., session information matching) before, but the technology stack is Python 3.10 and Flask 2.0 (slightly older version, partial matching), and the task type is user management API (similar type but not completely consistent); the technology stack of Sandbox Y perfectly matches Python 3. 11 and Flask 2.2 (complete matching of the technology stack information), and the task type is also API development (task type information matching), but the user is another user Xiao Li (user information not matching), and the session is another independent project debugging session (session information not matching); the task type of the Sandbox Z completely matches payment interface development (task type information matching), the user is Xiao Wang (user information matching), but the technology stack is Python 3.9 and Flask 1.0 (too old version, almost no matching), and the session is a historical session of another project a month ago (session information not matching). It can be seen that Sandbox X matches user information and session information, Sandbox Y matches technology stack and task type, and Sandbox Z matches the user and task type. The system selects the matching reusable sandbox in the following ways: 1. The more matching items, the better. Sandbox X has two matching items (user and session), Sandbox Y has two (technology stack and task type), and Sandbox Z also has two (user and task type); 2. Next, the matching degree is compared: for example, the technology stack of Sandbox Y is completely consistent, technology stack version of Sandbox X is different, and the technology stack of Sandbox X is completely incompatible; 3. Finally, the most critical weight rule: the independent contribution degree of session information is the highest, followed by user information, then technology stack information, and task type information has the lowest contribution. Sandbox X's advantage lies in the matching of session information, which has the highest weight, enabling seamless connection of the development environment, saving initialization time. The matching of user information has the second highest weight, reflecting personal preferences and habits. Although the technology stack only partially matches, the contribution weight is low, and the system may fine-tune and update the version. The technology stack of Sandbox Y is completely matched, but the contribution weight is low. In addition, the session and user of Sandbox Y do not match, and additional context configuration may be required after reuse. The task type matching of Sandbox Z has the lowest contribution, the user matching weight is medium, but the technology stack is too old, and the reuse cost is rather high. Therefore, finally, due to the dominant high-weight matching items of session and user, the overall matching degree score is the highest, and the system selects Sandbox X as the matching reusable sandbox. The system only needs to upgrade the Flask framework (technology stack) to quickly start the large model to generate code in a safe and isolated environment.

Step 304: In response to the absence of a reusable sandbox matching the personalized requirement information, determine a to-be-activated sandbox corresponding to the personalized requirement information from a pre-constructed sandbox hot pool, and allocate the to-be-activated sandbox to the target user.

Steps 303-304 are consistent with steps 202-203 shown in FIG. 2. For the same content, please refer to the corresponding part of the previous embodiment, which will not be repeated here.

In this embodiment, different from the embodiment shown in FIG. 2, steps 301-302 in this embodiment specifically provide an implementation of how to determine personalized requirement information, and steps 303-304 correspond to steps 202-203, providing an implementation of how to schedule a sandbox. There is no causal or dependent relationship between the two implementations, and they do not need to be applied in one embodiment at the same time. The implementations may be applied in different embodiments to determine personalized requirement information as needed. This embodiment only exists as a preferred embodiment that includes both specific implementations.

The sandbox scheduling method based on a code generation large model provided by the embodiment of the present disclosure first extracts user information, session information, and task requirement information from a code development request, then determines technology stack information and task type information according to the task requirement information; when there is a reusable sandbox matching the personalized requirement information, it preferentially allocates the reusable sandbox matching the personalized requirement information to the target user; when there is no reusable sandbox matching the personalized requirement information, it determines a to-be-activated sandbox corresponding to the personalized requirement information from a pre-constructed sandbox hot pool and allocates the to-be-activated sandbox to the target user. By extracting user information, session information, and task requirement information to determine technology stack information and task type information, this embodiment generates executable environment configuration information, avoiding environment mismatches, resource waste, or state disruptions caused by semantic ambiguity or ambiguity; further, it realizes the rapid recovery of the development environment through the priority matching of the reusable sandbox, ensuring a continuous experience during the development process, and starts a sandbox hot pool scheduling strategy when there is no reusable sandbox matching the personalized requirement information. By screening the to-be-activated sandbox matching the personalized requirement information from the sandbox hot pool and performing personalized configuration on the to-be-activated sandbox according to the personalized requirement information, the delay in configuring the development environment is reduced, and the resource utilization efficiency is improved.

On the basis of the above implementation manner, to clarify the specific construction manner of the sandbox hot pool, this embodiment also discloses that the process of pre-constructing the sandbox hot pool includes: determining a first set including multiple pieces of technology stack information and a second set including multiple task types; determining creation requirements for multiple operating environments based on combinations of elements contained in the first set and the second set; creating initial sandboxes for operating environments that meet different creation requirements, and deploying the same code generation large model in each initial sandbox to obtain multiple to-be-activated sandboxes; constructing the sandbox hot pool based on the multiple to-be-activated sandboxes. The execution subject may also pre-warm the to-be-activated sandboxes in the sandbox hot pool in advance according to a pre-determined active usage period; where the active usage period is determined based on historical usage situations and/or task distribution information. Through the above approach, this embodiment prefabricates a batch of to-be-activated sandboxes with consistent basic environments and unified large models by arranging and combining technology stacks and task types, and then performs precise pre-warming processing on the to-be-activated sandboxes in combination with historical and real-time data, thereby improving the resource utilization rate and response speed of the system.

On the basis of the above implementation, this embodiment also discloses a specific implementation of scheduling sandboxes using a load balancing strategy. When different sandboxes are distributed on different nodes, based on the resource load situations of different nodes and a preset load balancing strategy, a reusable sandbox on a first target node is determined as a reusable sandbox matching the personalized requirement or a to-be-activated sandbox on the first target node is determined as a to-be-activated sandbox matching the personalized requirement. The load balancing strategy is used to balance the usage of CPU resources, GPU resources, memory resources, network resources, and storage resources on each node, so that the resource usage on each node is as uniform as possible. Next, an example is given to help understand. Currently, there are three nodes. Node A stores a matching reusable sandbox, but the GPU utilization rate has reached 92%. Node B needs to activate a sandbox from the hot pool, and the GPU utilization rate is only 35%. Node C stores a reusable sandbox, and the GPU utilization rate is 65%, but the network delay exceeds 100ms. When the user request requires a GPU sandbox, the system first excludes Node A (there is a risk of GPU overload). Node B has a low GPU load but requires activation time. Node C has a medium GPU load but high latency. Although Node B requires an activation operation, its abundant GPU resources can ensure the smoothness of subsequent tasks. Therefore, the system can select the sandbox on Node B as the to-be-activated sandbox matching the personalized requirement. On the premise of ensuring function matching, this embodiment uses a load balancing strategy to schedule sandboxes to physical nodes with optimal comprehensive load, reducing the risk of single-point resource overload and improving the utilization efficiency of overall resources.

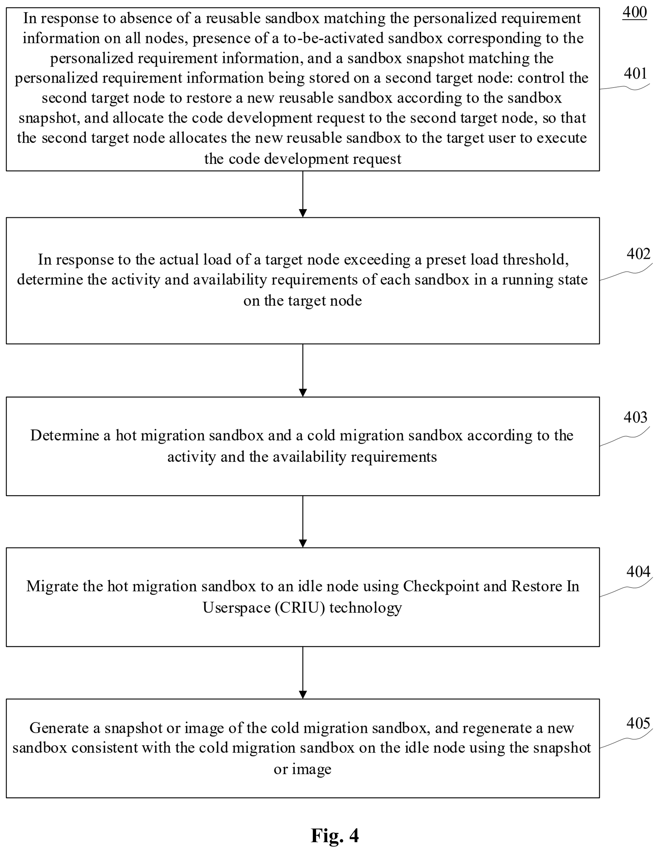

On the basis of the sandbox scheduling method based on a code generation large model disclosed in flows 200 and 300, the embodiment of the present disclosure further provides a sandbox scheduling method based on a code generation large model. For the case of how to reasonably schedule sandboxes using snapshot locality, a specific implementation manner is given. Please refer to the flowchart in FIG. 4, where the flow 400 includes the following steps.

Step 401: In response to absence of a reusable sandbox matching the personalized requirement information on all nodes, presence of a to-be-activated sandbox corresponding to the personalized requirement information, and a sandbox snapshot matching the personalized requirement information being stored on a second target node: control the second target node to restore a new reusable sandbox according to the sandbox snapshot, and allocate the code development request to the second target node, so that the second target node allocates the new reusable sandbox to the target user to execute the code development request.

In this embodiment, when there is no reusable sandbox matching the personalized requirement information on all nodes, there is a to-be-activated sandbox corresponding to the personalized requirement information, and a sandbox snapshot matching the personalized requirement information is stored on a second target node, the execution subject controls the second target node to restore a new reusable sandbox according to the sandbox snapshot. The second target node refers to a node that does not have a to-be-activated sandbox corresponding to the personalized requirement information but stores a sandbox snapshot matching the personalized requirement information. A sandbox snapshot is a complete archive of the development environment state, including technology stack cloning, resource mirroring, running state, etc. When a developer interrupts work, the system compresses the disk, memory, and running state of the sandbox into a snapshot. Upon the next request, a complete environment including unsaved code, debugging breakpoints, and even terminal history can be quickly reconstructed on any node through the snapshot.

In this embodiment, after restoring the new reusable sandbox, the execution subject allocates the code development request to the second target node, so that the second target node allocates the new reusable sandbox to the target user to execute the code development request.

Next, an example is given to help understand. When there is no reusable sandbox on any node, the hot pool has a to-be-activated sandbox on Node A, and the system detects that Node B stores a sandbox snapshot previously saved by the target user, the system may restore a new reusable sandbox according to the sandbox snapshot, allocate the code development request to the second target node, and the second target node allocates the new reusable sandbox to the target user to execute the code development request.

Step 402: In response to the actual load of a target node exceeding a preset load threshold, determine the activity and availability requirements of each sandbox in a running state on the target node.

In this embodiment, when the actual load of the target node exceeds a preset load threshold, the activity and availability requirements of each sandbox in a running state on the target node are determined. The activity degree may be user interaction frequency, resource consumption growth rate, session maintenance state, etc. The availability requirement refers to the bottom line of tolerance for service interruption of a specific task, which can reflect the criticality of the task through classification. For example, a real-time debugging session requiring millisecond-level migration is of high level, a compilation task allowing second-level interruption is of medium level, and an offline training allowing minute-level suspension is of low level.

Step 403: Determine a hot migration sandbox and a cold migration sandbox according to the activity and the availability requirements.

In this embodiment, the execution subject determines a hot migration sandbox and a cold migration sandbox according to the activity and the availability requirements. The hot migration sandbox usually refers to a sandbox with an activity degree greater than a first preset threshold and an availability requirement level of high level, and the cold migration sandbox usually refers to a sandbox with an activity degree less than a second preset threshold and an availability requirement level of low level or medium level. The values of the first preset threshold and the second preset threshold may be the same or different, and developers can set the specific values of the first preset threshold and the second preset threshold according to actual needs.

Step 404: Migrate the hot migration sandbox to an idle node using Checkpoint and Restore In Userspace (CRIU) technology.

In this embodiment, the execution subject migrates the hot migration sandbox to an idle node using Checkpoint and Restore In Userspace (CRIU) technology. Checkpoint and Restore In Userspace (CRIU) technology is an underlying mechanism for implementing freezing and migration of runtime process states. It can save the complete state (including data in memory) of a running program like taking a photo, and then restore it intact on another server, even keeping network connections unchanged. Its core lies in transferring a running application program and its complete state to a new environment without interrupting the service.

Step 405: Generate a snapshot or image of the cold migration sandbox, and regenerate a new sandbox consistent with the cold migration sandbox on the idle node using the snapshot or image.

In this embodiment, the execution subject generates a snapshot or image of the cold migration sandbox, and regenerates a new sandbox consistent with the cold migration sandbox on the idle node using the snapshot or image, thereby realizing the maximum utilization of idle resources.

In this embodiment, different from the embodiments shown in FIGS. 2 and 3, Step 401 specifically provides an implementation of how to create a new reusable sandbox, and Steps 402-405 specifically provide an implementation of how to reasonably schedule sandboxes when the target node is overloaded. There is a causal and dependent relationship between the above two implementations, and the implementation provided in Step 401 can exist independently, while the implementation provided in Steps 402-405 depends on the implementation disclosed in Step 401. Therefore, Step 401 may be independently applied in an embodiment, and Steps 402-405 need to be applied with step 401 in an embodiment. This embodiment only exists as a preferred embodiment that includes both specific implementations.

The sandbox scheduling method based on a code generation large model provided by this embodiment quickly reconstructs a new reusable sandbox matching the personalized requirement information using a sandbox snapshot when there is no available sandbox, improving the recovery speed of the environment state. Moreover, when the actual load of the target node exceeds a preset load threshold, it determines a hot migration sandbox and a cold migration sandbox according to the activity and availability requirements of each sandbox in a running state on the target node, and migrates the hot migration sandbox and the cold migration sandbox respectively based on different migration strategies, thereby realizing the maximum utilization of idle resources while ensuring the core user experience.

To deepen understanding, the present disclosure also provides a specific implementation scheme in combination with a specific application scenario.

In the code execution sandbox scheduling scenario of this implementation, the Coding Agent (AI code agent system) includes the following modules: a request analysis and routing module, a multi-level scheduler, a snapshot manager, a migration controller, and a hot pool manager. The function of the request analysis and routing module is to parse Coding Agent requests (i.e., the code development requests mentioned in the above embodiments), identify technology stack types, estimate task load characteristics, identify session information, and determine whether the environment can be reused; the multi-level scheduler is divided into a session affinity scheduler (used to preferentially reuse the allocated environment, i.e., the sandboxes with the same session information or the sandboxes with historical session information matching the session information mentioned in the above embodiments), a load-aware scheduler (performs sandbox scheduling based on the real load of the node, preferentially selects idle nodes), a technology stack balancing scheduler (used to identify the technology stack of the task to avoid concentration of tasks of the same type), and a snapshot locality scheduler (preferentially selects nodes with snapshots); the snapshot manager is used to manage file system snapshots (Docker Commit), manage memory snapshots (CRIU), and store, distribute, and clean up snapshots; the migration controller is used to decide when to perform hot migration and cold migration, and execute CRIU operations to ensure the transparency of the migration process; the hot pool manager is used to manage and maintain a pool of pre-warmed sandbox instances grouped by technology stack, and dynamically adjust the pool capacity.

In this implementation, the hot pool manager maintains the sandboxes in the hot pool. Each sandbox in the hot pool needs to be pre-warmed before being added to the hot pool. Common dependencies have been installed, and they are grouped by technology stack to support immediate allocation and use. Its response time can reach less than 100 milliseconds. The capacity of the hot pool is dynamically adjusted according to historical load and technology stack usage frequency. The specific pre-warming steps of the sandbox are as follows: 1. Container creation and startup: specifically, first create a Pod (the smallest deployment unit in Kubernetes, which may contain one or more containers) in Kubernetes (an open-source platform for automating the deployment, scaling, and management of containerized applications), then pull the base image, start the container, and finally initialize the file system; 2. Load the runtime of the corresponding technology stack and verify the runtime version and functions; 3. Pre-install common dependencies: install common packages according to the technology stack and verify that the dependencies are installed successfully; 4. Prepare development tools: install code editing and debugging tools, and configure the tool environment; 5. Health check: specifically including verifying the health status of the container, verifying the availability of the runtime, verifying network connectivity, and marking the container as a READY state after passing the verification. The total pre-warming time of the above sandbox is 6-10 seconds.

In this implementation, the hot pool manager may also manage the capacity of the hot pool. Specifically, a baseline capacity of 15-30 sandbox instances may be allocated and set according to historical usage frequency, and these sandbox instances are allocated according to the proportion of technology stack usage; then monitor the usage rate of each technology stack: when the usage rate of a certain technology stack is higher than 80%, increase the capacity of the technology stack; when the usage rate of a certain technology stack is lower than 30%, reduce the capacity of the technology stack; the interval for capacity adjustment may be set to evaluate once every 5 minutes; the hot pool manager can also expand or shrink the capacity of the hot pool according to trigger conditions. The expansion trigger conditions are: hot pool usage rate > 80%, waiting queue length > 5 for 2 consecutive minutes, and allocation failure rate > 5%. The specific expansion strategy is to prioritize expanding the technology stack with the highest usage rate, expand 2-5 instances each time, and the expansion interval is at least 1 minute. The shrinkage trigger conditions are: hot pool usage rate < 30%, no waiting queue for 10 consecutive minutes, and total capacity > maximum capacity. The restricted shrinkage strategy is to prioritize shrinking the instances with the longest idle time, shrink 1-3 instances each time, and maintain the minimum capacity.

In this implementation, the preset optimization strategies of the hot pool include: 1. Intelligent predictive pre-warming: based on the prediction of the user historical usage pattern, pre-warm in advance before the user active period; 2. On-demand supplementary pre-warming: when a sandbox instance in the hot pool is allocated, immediately create a new instance to supplement, maintain the stability of the hot pool capacity, execute asynchronously without affecting the current allocation; 3. Batch pre-warming: create multiple sandbox instances in batches and execute the pre-warming process in parallel to improve pre-warming efficiency.

In this implementation, the Coding Agent requests sandboxes multiple times in the same session. The system realizes environment reuse through session affinity to avoid repeated initialization. Environment reuse scenarios include code iterative development (re-running after modifying code), debugging process (running code multiple times for debugging), test execution (running unit tests, integration tests), and continuous development (long-term development of the same project). Advantages of environment reuse: installed dependencies do not need to be reinstalled, and the cache of the package manager is retained; the code files written by the user are persistently retained in the sandbox, the working directory structure remains unchanged, and temporary files and compilation products are retained; the Git (a distributed version control system) repository state remains the same, and the current branch, commits, or uncommitted modification records are retained; and environment variables and configurations, background processes, and database connections do not need to be reinstalled.

In this implementation, the execution subject may bind the session record structure using a session binding model. The binding state is ACTIVE, which means the session is active and frequently used (interval < 5 minutes); the binding state is IDLE, which means the session is idle and temporarily not used (5-30 minutes); the binding state is EXPIRED, which means the session is expired and not used for a timeout ( > 30 minutes).

In this implementation, the multi-level scheduler selects sandboxes according to the following priorities:
Priority 1: Fully matched bound sandbox (response time < 50ms), referring to a bound sandbox with the same Session_ID (session ID) and healthy state, which may be reused immediately.
Priority 2: Sandbox of the same user and same project (response time < 500ms), which may refer to other session sandboxes of the same User_ID (user ID) and Project_ID (project ID), which may contain sandboxes with the same code and dependencies. After reuse, the working directory needs to be switched.
Priority 3: Sandbox of the same user and different projects (response time 1-2 seconds), referring to other project sandboxes of the same User_ID, which may contain the same technology stack and tools. After reuse, the new project environment needs to be initialized.
Priority 4: New sandbox in the hot pool (response time < 100ms), referring to an unbound hot pool sandbox, which is matched by technology stack. After being allocated to the target user, the project environment needs to be initialized.

In this implementation, the execution subject may also adopt a timeout strategy to manage the bound sandboxes. Specifically, when the sandbox is in short-term idle (5 minutes), the session state is converted from ACTIVE to IDLE, and the sandbox binding relationship is maintained; when the sandbox is in medium-term idle (30 minutes), the session state is converted from IDLE to EXPIRED, the binding relationship between the sandbox and the session is released, and the sandbox is reclaimed to the hot pool or released; when the sandbox is in absolute timeout (2 hours), regardless of whether it is active, the binding relationship between the sandbox and the session is forced to be released to prevent long-term occupation of resources.

In this implementation, the load-aware scheduler schedules sandboxes in the following ways:
Work phase identification: The resource requirements of the Coding Agent in different work phases are significantly different. Specifically, in the code writing phase, the resource requirements are low CPU and low memory, and a high-load node may be allocated; in the code compilation phase, the resource requirements are high CPU and medium memory, and a node with sufficient CPU may be preferentially allocated; in the code running phase, the resource requirements are medium CPU and medium memory, and the scheduling strategy is balanced scheduling; in the test execution phase, the resource requirements are medium-high CPU, medium memory, and high IO, and a node with sufficient resources may be preferentially allocated.

Node load monitoring: The Coding Agent may monitor the load of each node in real time. The specific monitoring indicators may include CPU usage rate (current CPU usage percentage), CPU load (1-minute, 5-minute, 15-minute average load), memory usage rate (used memory/total memory), available memory capacity (actually allocable memory), IO usage rate (disk read/write busyness), and network bandwidth usage rate (inbound and outbound traffic). The Coding Agent may schedule sandboxes using a comprehensive load score. The load score of each node = CPU load × 0.4 + memory load × 0.3 + 10 load × 0.2 + network load × 0.1. The score range is 0-100. The lower the score, the more idle the node.

Load-aware scheduling algorithm: The sandbox scheduling process is as follows: first, identify the task phase and resource requirements, parse request parameters, identify the technology stack and operation type, and estimate resource requirements; second, filter candidate nodes, filter nodes with insufficient resources, filter high-load nodes (load > 80%), and retain the list of available nodes; then calculate node adaptability, including resource matching degree score, load balancing score, snapshot locality score, and comprehensive score; finally, select the node with the highest score. The comprehensive score includes node total score, resource matching degree, and load balancing degree. The node total score = resource matching degree × 0.3 + load balancing degree × 0.4 + snapshot locality × 0.3. The resource matching degree = min(node available resources / task required resources, 1.0). The load balancing degree = (1 - node load score / 100).

Load protection mechanism: divided into high-load protection and load balancing. The high-load protection: if the node load > 80%: stop allocating new sandboxes; if the node load > 90%: trigger sandbox migration; if the node load > 95%: force evict low-priority sandboxes; load balancing: regularly (every 5 minutes) check the cluster load distribution, identify load imbalance (highest load - lowest load > 30%), and trigger sandbox rescheduling or migration.

In this implementation, the technology stack balancing scheduler schedules sandboxes in the following ways.

Technology stack resource characteristics: Different technology stacks have different resource usage characteristics. For example, Python has medium CPU characteristics, medium-high memory characteristics, and medium IO characteristics; Node.js has medium-low CPU characteristics, medium memory characteristics, and high IO characteristics.

Technology stack identification: The specific identification methods are explicit specification in request parameters, file feature identification, and historical record query.

Balanced scheduling strategy: The scheduling decision is to preferentially allocate new tasks to the node with the least number of the technology stack to avoid resource competition caused by concentration of tasks of the same type. CPU-intensive and IO-intensive tasks can coexist, and memory-intensive tasks are avoided to be concentrated, thereby realizing resource complementarity.

In this implementation, the Coding Agent uses Docker commit to take a snapshot of the sandbox file system. The snapshot content includes user code files, installed dependency packages, configuration files, compilation products, and data files. The snapshot timing is automatic snapshot at the end of the session, regular automatic snapshot (every 30 minutes), after important operations (installing dependencies, successful compilation), and manual triggering by the user. The snapshot naming format is <user_id>-<project_id>-<session_id>-<timestamp>.

In this implementation, the snapshot storage strategy is local storage (snapshots are preferentially stored on the node where they are created), distributed storage (synchronized to a distributed storage system), and hierarchical storage (hot data: node local SSD storage (fast speed, suitable for high-performance computing, applicable to scenarios with high latency and bandwidth requirements), warm data: node local HDD storage (large capacity, low cost, suitable for scenarios requiring a large amount of storage but low speed requirements), cold data: (object storage)). The snapshot distribution methods are active distribution (predict the node that the user may use next time and distribute the snapshot in advance), on-demand pulling (pull on demand when scheduling to a new node), and incremental transmission (only transmit the changed layers).

In this implementation, the snapshot locality scheduler preferentially allocates tasks to nodes with existing snapshots. Locality score: locality score = snapshot integrity × 0.6 + snapshot freshness × 0.4. Snapshot integrity: - complete snapshot locally: 1.0; - partial layers locally: 0.5; - no snapshot: 0.0. Snapshot freshness: - latest version: 1.0; - 1 day ago: 0.8; - 1 week ago: 0.5; - 1 month ago: 0.2. Scheduling decision: first query which nodes have snapshots of the user/project, then calculate the comprehensive node score (resource matching + load + locality), and finally preferentially select nodes with complete snapshots.

In this implementation, the snapshot manager is used for version management, incremental snapshots, snapshot deduplication, and snapshot cleanup. Version management refers to retaining the latest several versions for each project, supporting rollback to historical versions, and automatically cleaning up expired snapshots; incremental snapshots refer to using the Docker layer mechanism to only save the changed file layers, reducing storage space; snapshot deduplication refers to identifying the same file layers and sharing public layers; snapshot cleanup refers to regularly cleaning up snapshots that have not been used for a long time and retaining important snapshots marked by the user. In addition, the recovery process when there is a local snapshot is: 1. Check snapshot availability; 2. Create a container using the snapshot image; 3. Start the container; 4. Verify the environment; 5. Ready for use. The total time is 2-5 seconds.

In this implementation, CRIU is a process checkpoint and recovery technology in user space. CRIU capabilities include saving the complete state of a process such as memory, registers, and file descriptors, recovering the process on the same or different machines, the process does not need to be modified, the user is unaware, and Docker containers are supported. The checkpoint content includes memory image, register state, file descriptors, process tree, signal state, and time information.

In this implementation, the snapshot timing of the sandbox memory may be before migration (node load is too high or node maintenance), periodic checkpoint (long-running tasks), and user request (actively saving the running state). The snapshot process is: 1. Pause the container and send a signal to pause all processes; 2. Execute CRIU dump (use the CRIU tool to save the state of the currently running process to a dump file), scan the process tree, save memory pages, save file descriptors, and generate checkpoint files; 3. Compression and storage: compress the checkpoint files and store them locally or in distributed storage; 4. Restore the container and send a signal to resume the processes. The snapshot optimization steps are incremental snapshots (only save changed memory pages), page deduplication (identify the same memory pages), compression (use an efficient compression algorithm), and parallel processing (multi-threaded parallel saving).

In this implementation, the migration controller migrates a running sandbox from one node to another. Migration trigger conditions include load balancing (the source node load is too high), node maintenance (the node needs to be upgraded or restarted), fault recovery (the node fails), and resource optimization (integrate scattered sandboxes). Migration decision: 1. Evaluate migration benefits: specifically evaluate migration costs (time, network), migration benefits (reduced load, resource optimization), and execute only if benefits > costs. 2. Select the target node: select a target node with sufficient resources, low load, low network latency, and snapshot locality (bonus item). The migration process is as follows: Pre-iteration phase (optional, to reduce downtime): 1. Create an initial checkpoint on the source node; 2. Transfer the checkpoint to the target node; 3. Pre-create a container on the target node; 4. The source node continues to run and records memory changes; Final migration phase: 1. The source node pauses the container, and the downtime starts; 2. Create a final checkpoint, CRIU dump (if there is pre-iteration, only save increments); 3. Transfer the checkpoint to the target node, compress, high-speed network transmission, and verify integrity; 4. The target node restores the container, CRIU restore restores the process state, restores network connections, and the process continues to execute; 5. Update routing and binding, update sandbox location information, update network routing, and the downtime ends; 6. Clean up the source node, delete the source container, and release resources. Migration downtime: no pre-iteration: 5-10 seconds, with pre-iteration: < 1 second, basically no perception by the user.

In this implementation, there are the following migration failure scenarios: insufficient resources of the target node, network transmission failure, CRIU recovery failure, and timeout. Rollback mechanism: 1. Detect migration failure; 2. Stop target node operations; 3. Restore the source node container and send SIGCONT to resume the process; 4. Notify the scheduler of migration failure; 5. Analyze the cause of failure. Retry strategy: automatically retry several times, the interval between each retry increases, and select a different target node.

In this embodiment, the execution subject's specific processing of network connections is as follows: TCP (connection-oriented transport layer protocol) connection maintenance: CRIU supports saving and restoring TCP connections, and the TCP connection remains valid after migration; IP address processing: use an overlay network (a virtual network built on top of an existing physical network), the sandbox IP remains unchanged after migration, and the network layer automatically updates the routing.

In this implementation, the rapid recovery of the development environment is realized through the priority matching of the reusable sandbox, ensuring a continuous experience during the development process. In addition, this implementation also discloses a sandbox hot pool scheduling strategy when there is no reusable sandbox matching the personalized requirement information. By screening the to-be-activated sandbox matching the personalized requirement information from the sandbox hot pool and performing personalized configuration on the to-be-activated sandbox according to the personalized requirement information, the delay in configuring the development environment is reduced, and the resource utilization efficiency is improved. This implementation also determines technology stack information and task type information by extracting user information, session information, and task requirement information, generates executable environment configuration information, avoiding environment mismatches, resource waste, or state disruptions caused by semantic ambiguity or ambiguity; further, it realizes the rapid recovery of the development environment through the priority matching of the reusable sandbox, ensuring a continuous experience during the development process, and starts a sandbox hot pool scheduling strategy when there is no reusable sandbox matching the personalized requirement information. By screening the to-be-activated sandbox matching the personalized requirement information from the sandbox hot pool and performing personalized configuration on the to-be-activated sandbox according to the personalized requirement information, the delay in configuring the development environment is reduced, and the resource utilization efficiency is improved. In addition, the sandbox scheduling method based on a code generation large model provided by this implementation quickly reconstructs a new reusable sandbox matching the personalized requirement information using a sandbox snapshot when there is no available sandbox, improving the recovery speed of the environment state. Moreover, when the actual load of the target node exceeds a preset load threshold, a hot migration sandbox and a cold migration sandbox are determined according to the activity and availability requirements of each sandbox in a running state on the target node, and the hot migration sandbox and the cold migration sandbox are migrated respectively based on different migration strategies, thereby realizing the maximum utilization of idle resources while ensuring the core user experience.

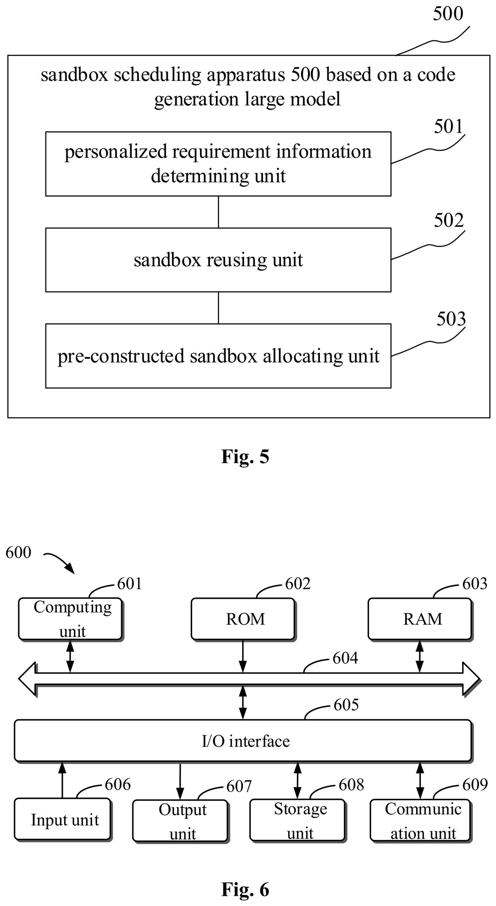

With further reference to FIG. 5, as an implementation of the methods shown in the above figures, the present disclosure provides an embodiment of a sandbox scheduling apparatus based on a code generation large model, which corresponds to the method embodiment shown in FIG. 2, and can be specifically applied to various electronic devices.

As shown in FIG. 5, the sandbox scheduling apparatus 500 based on a code generation large model of this embodiment may include: a personalized requirement information determining unit 501, a sandbox reusing unit 502, and a pre-constructed sandbox allocating unit 503.

A personalized requirement information determining unit 501 configured to determine personalized requirement information according to a code development request initiated by a target user; a sandbox reusing unit 502 configured to, in response to the presence of a reusable sandbox matching the personalized requirement information, allocate the reusable sandbox matching the personalized requirement information to the target user; where the reusable sandbox is a sandbox retaining data associated with the target user; a pre-constructed sandbox allocating unit 503 configured to, in response to the absence of a reusable sandbox matching the personalized requirement information, determine a to-be-activated sandbox corresponding to the personalized requirement information from a pre-constructed sandbox hot pool, and allocate the to-be-activated sandbox to the target user; where different sandboxes respectively provide the same code generation large model in different operating environments.

The specific processing of the personalized requirement information determining unit 501, the sandbox reusing unit 502, and the pre-constructed sandbox allocating unit 503 and their technical effects may be referred to the relevant descriptions of steps 201-203 in the corresponding embodiment of FIG. 2, respectively, and will not be repeated here.

In some optional implementations of this embodiment, the personalized requirement information determining unit 501 further includes: an information extraction module configured to extract user information, session information, and task requirement information from the code development request; an information determining module configured to determine technology stack information and task type information according to the task requirement information; where the technology stack information includes at least one of a programming language, front-end/back-end information, and design architecture, and the task type information includes at least one of code writing, code compilation, and test running. The reusable sandbox matching the personalized requirement information refers to a reusable sandbox that matches at least one of the user information, session information, technology stack information, and task type information, and the more matching items, the higher the matching degree. The independent contribution degrees of the session information, user information, technology stack information, and task type information to the matching degree decrease in sequence. The reusable sandbox includes at least one of the following: a sandbox with the same user information, a sandbox with associated user information related to the user information, a sandbox with the same session information, and a sandbox with historical session information belonging to the session information.

In some optional implementations of this embodiment, the process of pre-constructing the sandbox hot pool in the pre-constructed sandbox allocating unit 503 includes: determining a first set including multiple pieces of technology stack information and a second set including multiple task types; determining creation requirements for multiple operating environments based on combinations of elements contained in the first set and the second set; creating initial sandboxes for operating environments that meet different creation requirements, and deploying the same code generation large model in each initial sandbox to obtain multiple to-be-activated sandboxes; and constructing the sandbox hot pool based on the multiple to-be-activated sandboxes.

In some optional implementations of this embodiment, the process of pre-constructing the sandbox hot pool in the pre-constructed sandbox allocating unit 503 further includes: pre-warming the to-be-activated sandboxes in the sandbox hot pool in advance according to a pre-determined active usage period; where the active usage period is determined based on historical usage situations and/or task distribution information.

In some optional implementations of this embodiment, the sandbox scheduling apparatus 500 based on a code generation large model may further include: a first sandbox scheduling unit 504 configured to, in response to different sandboxes being distributed on different nodes, determine a reusable sandbox on a first target node as a reusable sandbox matching the personalized requirement or determine a to-be-activated sandbox on the first target node as a to-be-activated sandbox matching the personalized requirement based on resource load situations of different nodes and a preset load balancing strategy; where the load balancing strategy is used to balance the usage of CPU resources, GPU resources, memory resources, network resources, and storage resources on each node.

In some optional implementations of this embodiment, the sandbox scheduling apparatus 500 based on a code generation large model may further include: a second sandbox scheduling unit 505 configured to, in response to absence of reusable sandbox matching the personalized requirement information on all nodes, presence of a to-be-activated sandbox corresponding to the personalized requirement information, and a sandbox snapshot matching the personalized requirement information being stored on a second target node: control the second target node to restore a new reusable sandbox according to the sandbox snapshot, and allocate the code development request to the second target node, so that the second target node allocates the new reusable sandbox to the target user to execute the code development request.

In some optional implementations of this embodiment, the sandbox scheduling apparatus 500 based on a code generation large model may further include: a third sandbox scheduling unit 506 configured to, in response to the actual load of a target node exceeding a preset load threshold, determine the activity and availability requirements of each sandbox in a running state on the target node; determine a hot migration sandbox and a cold migration sandbox according to the activity and the availability requirements; migrate the hot migration sandbox to an idle node using Checkpoint and Restore In Userspace (CRIU) technology; and generate a snapshot or image of the cold migration sandbox, and regenerate a new sandbox consistent with the cold migration sandbox on the idle node using the snapshot or image.

This embodiment exists as an apparatus embodiment corresponding to the above method embodiment. The sandbox scheduling apparatus based on a code generation large model provided by this embodiment realizes the rapid recovery of the development environment through the priority matching of the reusable sandbox, ensuring a continuous experience during the development process. In addition, this implementation also discloses a sandbox hot pool scheduling strategy when there is no reusable sandbox matching the personalized requirement information. By screening the to-be-activated sandbox matching the personalized requirement information from the sandbox hot pool and performing personalized configuration on the to-be-activated sandbox according to the personalized requirement information, the delay in configuring the development environment is reduced, and the resource utilization efficiency is improved. This implementation also determines technology stack information and task type information by extracting user information, session information, and task requirement information, generates executable environment configuration information, avoiding environment mismatches, resource waste, or state disruptions caused by semantic ambiguity or ambiguity; further, it realizes the rapid recovery of the development environment through the priority matching of the reusable sandbox, ensuring a continuous experience during the development process, and starts a sandbox hot pool scheduling strategy when there is no reusable sandbox matching the personalized requirement information. By screening the to-be-activated sandbox matching the personalized requirement information from the sandbox hot pool and performing personalized configuration on the to-be-activated sandbox according to the personalized requirement information, the delay in configuring the development environment is reduced, and the resource utilization efficiency is improved. In addition, the sandbox scheduling method based on a code generation large model provided by this implementation manner quickly reconstructs a new reusable sandbox matching the personalized requirement information using a sandbox snapshot when there is no available sandbox, improving the recovery speed of the environment state. Moreover, when the actual load of the target node exceeds a preset load threshold, a hot migration sandbox and a cold migration sandbox are determined according to the activity and availability requirements of each sandbox in a running state on the target node, and the hot migration sandbox and the cold migration sandbox are migrated respectively based on different migration strategies, thereby realizing the maximum utilization of idle resources while ensuring the core user experience.

According to the embodiments of the present disclosure, the present disclosure also provides an electronic device, which includes: at least one processor; and a memory communicatively connected to the at least one processor; where the memory stores instructions executable by the at least one processor, and the instructions, when executed by the at least one processor, cause the at least one processor to implement the sandbox scheduling method based on a code generation large model described in any of the above embodiments.

According to the embodiments of the present disclosure, the present disclosure also provides a readable storage medium storing computer instructions, where the computer instructions are configured to cause a computer to implement the sandbox scheduling method based on a code generation large model described in any of the above embodiments.

According to the embodiments of the present disclosure, the present disclosure also provides a computer program product, where the computer program, when executed by a processor, is capable of implementing the sandbox scheduling method based on a code generation large model described in any of the above embodiments.

FIG. 6 shows a schematic block diagram of an example electronic device 600 that may be used to implement the embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital assistants, cellular telephones, smartphones, wearable devices, and other similar computing devices. The components shown herein, their connections and relationships, and their functions are merely examples and are not intended to limit the implementations of the present disclosure described and/or claimed herein.

As shown in FIG. 6, the device 600 includes a computing unit 601, which can perform various appropriate actions and processes according to a computer program stored in a read-only memory (ROM) 602 or a computer program loaded from a storage unit 608 into a random access memory (RAM) 603. In the RAM 603, various programs and data required for the operation of the device 600 can also be stored. The computing unit 601, the ROM 602, and the RAM 603 are connected to each other through a bus 604. An input/output (I/O) interface 605 is also connected to the bus 604.

Multiple components in the device 600 are connected to the I/O interface 605, including: an input unit 606, such as a keyboard, a mouse, etc.; an output unit 607, such as various types of displays, speakers, etc.; a storage unit 608, such as a magnetic disk, an optical disk, etc.; and a communication unit 609, such as a network card, a modem, a wireless communication transceiver, etc. The communication unit 609 allows the device 600 to exchange information/data with other devices through a computer network such as the Internet and/or various telecommunication networks.

The computing unit 601 may be various general-purpose and/or special-purpose processing components with processing and computing capabilities. Some examples of the computing unit 601 include, but are not limited to, a central processing unit (CPU), a graphics processing unit (GPU), various dedicated artificial intelligence (AI) computing chips, various computing units running machine learning model algorithms, a digital signal processor (DSP), and any suitable processor, controller, microcontroller, etc. The computing unit 601 executes the various methods and processes described above, such as the sandbox scheduling method based on a code generation large model. For example, in some embodiments, the sandbox scheduling method based on a code generation large model may be implemented as a computer software program tangibly contained in a machine-readable medium, such as the storage unit 608. In some embodiments, part or all of the computer program may be loaded and/or installed onto the device 600 via the ROM 602 and/or the communication unit 609. When the computer program is loaded into the RAM 603 and executed by the computing unit 601, one or more steps of the sandbox scheduling method based on a code generation large model described above may be executed. Alternatively, in other embodiments, the computing unit 601 may be configured to execute the sandbox scheduling method based on a code generation large model by any other suitable means (for example, by means of firmware).

Various implementations of the systems and technologies described herein above may be implemented in digital electronic circuit systems, integrated circuit systems, field programmable gate arrays (FPGA), application specific integrated circuits (ASIC), application specific standard products (ASSP), systems on a chip (SOC), complex programmable logic devices (CPLD), computer hardware, firmware, software, and/or combinations thereof. These various implementations may include: being implemented in one or more computer programs that may be executed and/or interpreted on a programmable system including at least one programmable processor, which may be a dedicated or general-purpose programmable processor that may receive data and instructions from a storage system, at least one input device, and at least one output device, and transmit data and instructions to the storage system, the at least one input device, and the at least one output device.

Program code for implementing the method of the present disclosure may be written in any combination of one or more programming languages. These program codes may be provided to a processor or controller of a general-purpose computer, special-purpose computer, or other programmable data processing apparatus, such that the program codes, when executed by the processor or controller, cause the functions/operations specified in the flowcharts and/or block diagrams to be implemented. The program code may be executed entirely on the machine, partly on the machine, partly on the machine and partly on a remote machine as a stand-alone software package, or entirely on a remote machine or server.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of machine-readable storage media may include electrical connections based on one or more wires, portable computer disks, hard disks, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination of the above.

To provide interaction with a user, the systems and technologies described herein may be implemented on a computer having: a display device (for example, a CRT (cathode ray tube) or LCD (liquid crystal display) monitor) for displaying information to the user; and a keyboard and a pointing device (for example, a mouse or trackball) through which the user can provide input to the computer. Other types of devices may also be used to provide interaction with the user; for example, feedback provided to the user may be any form of sensory feedback (for example, visual feedback, auditory feedback, or tactile feedback); and input from the user may be received in any form, including acoustic input, voice input, or tactile input.

The systems and technologies described herein can be implemented in a computing system including back-end components (for example, as a data server), or a computing system including middleware components (for example, an application server), or a computing system including front-end components (for example, a user computer with a graphical user interface or web browser through which the user can interact with the implementation of the systems and technologies described herein), or any combination of such back-end components, middleware components, or front-end components. The components of the system can be interconnected by any form or medium of digital data communication (for example, a communication network). Examples of communication networks include: a local area network (LAN), a wide area network (WAN), and the Internet.

A computer system may include a client and a server. The client and server are generally remote from each other and typically interact through a communication network. The relationship of client and server arises by virtue of computer programs running on the respective computers and having a client-server relationship to each other. The server may be a cloud server, also known as a cloud computing server or cloud host, which is a host product in the cloud computing service system, designed to solve the defects of difficult management and weak business scalability in traditional physical hosts and virtual private server (VPS) services.

According to the technical solutions of the embodiments of the present disclosure, the rapid recovery of the development environment is realized through the priority matching of the reusable sandbox, ensuring a continuous experience during the development process. In addition, this implementation also discloses a sandbox hot pool scheduling strategy when there is no reusable sandbox matching the personalized requirement information. By screening the to-be-activated sandbox matching the personalized requirement information from the sandbox hot pool and performing personalized configuration on the to-be-activated sandbox according to the personalized requirement information, the delay in configuring the development environment is reduced, and the resource utilization efficiency is improved. This implementation also determines technology stack information and task type information by extracting user information, session information, and task requirement information, generates executable environment configuration information, avoiding environment mismatches, resource waste, or state disruptions caused by semantic ambiguity or ambiguity; further, it realizes the rapid recovery of the development environment through the priority matching of the reusable sandbox, ensuring a continuous experience during the development process, and starts a sandbox hot pool scheduling strategy when there is no reusable sandbox matching the personalized requirement information. By screening the to-be-activated sandbox matching the personalized requirement information from the sandbox hot pool and performing personalized configuration on the to-be-activated sandbox according to the personalized requirement information, the delay in configuring the development environment is reduced, and the resource utilization efficiency is improved. In addition, the sandbox scheduling method based on a code generation large model provided by this implementation quickly reconstructs a new reusable sandbox matching the personalized requirement information using a sandbox snapshot when there is no available sandbox, improving the recovery speed of the environment state. Moreover, when the actual load of the target node exceeds a preset load threshold, it determines a hot migration sandbox and a cold migration sandbox according to the activity and availability requirements of each sandbox in a running state on the target node, and migrates the hot migration sandbox and the cold migration sandbox respectively based on different migration strategies, thereby realizing the maximum utilization of idle resources while ensuring the core user experience.

It should be understood that the steps of reordering, adding or deleting may be performed using the various forms of flows shown above. For example, the steps described in the present disclosure may be executed in parallel, sequentially, or in a different order, so long as the desired results of the technical solutions disclosed in the present disclosure can be achieved, and no limitation is imposed herein.

The foregoing detailed description is not intended to limit the scope of the present disclosure. It will be appreciated by those skilled in the art that various modifications, combinations, sub-combinations, and substitutions may be made depending on design requirements and other factors. Any modifications, equivalents, and improvements made within the spirit and principles of the present disclosure shall be included within the scope of protection of the present disclosure.

## Claims

1. A sandbox scheduling method based on a code generation large model, comprising:
determining (201) personalized requirement information according to a code development request initiated by a target user;
in response to presence of a reusable sandbox matching the personalized requirement information, allocating (202) the reusable sandbox matching the personalized requirement information to the target user; wherein the reusable sandbox is a sandbox retaining data associated with the target user; and
in response to absence of the reusable sandbox matching the personalized requirement information, determining (203) a to-be-activated sandbox corresponding to the personalized requirement information from a pre-constructed sandbox hot pool, and allocating the to-be-activated sandbox to the target user; wherein different sandboxes respectively provide the same code generation large model in different operating environments.

2. The method according to claim 1, wherein the determining personalized requirement information according to the code development request initiated by the target user comprises:
extracting (301) user information, session information, and task requirement information from the code development request; and
determining (302) technology stack information and task type information according to the task requirement information; wherein the technology stack information includes at least one of a programming language, front-end/back-end information, or design architecture, and the task type information includes at least one of code writing, code compilation, or test running.

3. The method according to claim 2, wherein the reusable sandbox matching the personalized requirement information refers to a reusable sandbox matching at least one of the user information, the session information, the technology stack information, or the task type information, wherein a matching degree increases as a number of matching items among the user information, the session information, the technology stack information, and the task type information increases.

4. The method according to claim 3, wherein independent contribution degrees of the session information, the user information, the technology stack information, and the task type information to the matching degree decrease in sequence.

5. The method according to one of claims 2 to 4, wherein the reusable sandbox includes at least one of:
a sandbox with identical user information, a sandbox having associated user information related to the user information, a sandbox with identical session information, or a sandbox with historical session information matching the session information.

6. The method according to one of the preceding claims, wherein a process of pre-constructing the sandbox hot pool comprises:
determining a first set comprising a plurality of pieces of technology stack information and a second set comprising a plurality of task types;
determining creation requirements for a plurality of operating environments based on combinations of elements comprised in the first set and the second set;
creating initial sandboxes for operating environments satisfying different creation requirements, and deploying the same code generation large model in each initial sandbox to obtain a plurality of to-be-activated sandboxes; and
constructing the sandbox hot pool based on the plurality of to-be-activated sandboxes.

7. The method according to claim 6, further comprising:
pre-warming the to-be-activated sandboxes in the sandbox hot pool in advance according to a pre-determined active usage period; wherein the active usage period is determined based on historical usage situations and/or task distribution information.

8. The method according to any one of claims 1 to 7, further comprising:
in response to different sandboxes being distributed on different nodes, determining a reusable sandbox on a first target node as a reusable sandbox matching the personalized requirement or determining a to-be-activated sandbox on the first target node as a to-be-activated sandbox matching the personalized requirement based on resource load situations of different nodes and a preset load balancing strategy; wherein the load balancing strategy is used to balance usage of CPU resources, GPU resources, memory resources, network resources, and storage resources on each node.

9. The method according to claim 8, further comprising:
in response to (i) absence of a reusable sandbox matching the personalized requirement information on all nodes, (ii) presence of a to-be-activated sandbox corresponding to the personalized requirement information, and (iii) a sandbox snapshot matching the personalized requirement information being stored on a second target node: controlling (401) the second target node to restore a new reusable sandbox according to the sandbox snapshot, and allocating the code development request to the second target node, so that the second target node allocates the new reusable sandbox to the target user to execute the code development request.

10. The method according to claim 8 or 9, further comprising:
in response to an actual load of a target node exceeding a preset load threshold, determining (402) activity and availability requirements of sandboxes in a running state on the target node;
determining (403) a hot migration sandbox and a cold migration sandbox according to the activity and the availability requirements;
migrating (404) the hot migration sandbox to an idle node using Checkpoint/Restore In Userspace (CRIU) technology; and
generating (405) a snapshot or an image of the cold migration sandbox, and regenerating a new sandbox consistent with the cold migration sandbox on the idle node using the snapshot or the image.

11. An electronic device, comprising:
at least one processor; and
a memory communicatively connected to the at least one processor; wherein
the memory stores instructions executable by the at least one processor, the instructions, when executed by the at least one processor, cause the at least one processor to perform the sandbox scheduling method based on a code generation large model according to any one of claims 1 to 9.

12. A non-transitory computer-readable storage medium storing computer instructions, the computer instructions being configured to cause a computer to perform the sandbox scheduling method based on a code generation large model according to any one of claims 1 to 9.

13. A computer program product, comprising a computer program which, when executed by a processor, implements the sandbox scheduling method based on a code generation large model according to any one of claims 1 to 9.
